# EUROPEAN PATENT APPLICATION

(11) **EP 1 775 006 A1**
(43) Date of publication of application: **18.04.2007**
(21) Application number: 06255185.8
(22) Date of filing: 09.10.2006
(51) Int. Cl.: B01D 39/16, B01D 39/18

(54) **Filter, filter media, and methods for making same**

(30) Priority: 14.10.2005 US 250726
(71) Applicant: General Electric Company, Schenectady, NY 12345 (US)
(72) Inventor: Smithies, Alan, Kansas 66213 (US)
(74) Representative: Illingworth-Law, William Illingworth

(57) **Abstract**

A composite filter medium (10) includes a corrogated substrate (12) of nonwoven porous synthetic material, cellulose, or combinations thereof. The filter medium also includes a layer of bulk meltspun nanofibers (30) anchored or bonded to the substrate. At least about 85% of the fine fibers have diameters less than 1000 nanometers in diameter.

## Description

### BACKGROUND OF THE INVENTION

This invention relates generally to filter media, and more particularly to filter media and filters suitable for use in regenerable filtration applications.

Many polymer types and fibers sizes are commonly used in the manufacture of filter media. At least one known media producer applies nanofibers to a surface of a regular paper filter media to enhance its performance. Such nanofibers are generally less than 1000 nanometers or 1.0 micron in diameter. Nanofiber technology, i.e., the fabrication of very small fibers, has been known and practiced for many years. For example, it is common to produce nanofibers using an electrospinning process. Fibers sized greater than 1 micron and, for the most part, fibers sized greater than 10 microns, are most commonly used in industrial, regenerable filtration applications.

Other than electro-spinning, the only other common process for producing fine fibers used in filtration and are less than 10 microns in diameter (nominally 4-8 microns) is "melt blowing". Although the cost of melt blowing is relatively low, filter media produced from meltblown nano sized fibers are not yet fully commercialized, thus electro-spinning, remains the only known process for making very fine nanofibers used in filtration. However, the higher costs associated with electro-spinning have been an impediment to the greater acceptance of this technology in filtration applications.

However, at least one known filter medium comprises a stand-alone, standard corrugated cellulose-based filtration paper (approximately 70 to 85 lb. per 3,000 sq. ft. or 31.75 to 38.56 kg. per 278.7 sq. m.), a corrugated synthetic filter paper, and/or a standard corrugated cellulose-based filtration paper (approximately 70 to 85 lb. per 3,000 sq. ft. or 31.75 to 38.56 kg. per 278.7 sq. m.) that is combined with an electrostatically charged synthetic meltdown layer (5-15g/sq. m. layer of fibers with an average fiber size of about 4 to 8 microns). However, known filter media have been found to be of limited use in critical, fine filtration applications in which the media are exposed to a reverse pulse of cleaning air to effect functional performance and longevity. For example, such media may in fact practice depth filtration when a dust cake is formed and embedded in the pore structure or depth of the media.

Specifically, as meltblown media uses a surface filtration technology, wherein the electrostatic forces that impart high filtration efficiency and performance to the media may restrict release of the dust cake during cleaning. As a result, the dust cake may cause an undesirable pressure drop across the filter assembly in which such media are used.

At least one other known filter configuration comprises a synthetic fine fiber layer across a surface of a cellulose-based corrugated filter paper. The fine fiber layer is produced using an electro-spinning process in which nano-sized fibers of about 100 nanometers up to a maximum of about 500 nanometers are applied to one surface of the cellulose or synthetic substrate. The applied nanofibers are very fine and have a relatively small surface pore structure and light weight (usually less than 1.0g/sq. m.). During use, a dust cake builds across the surface of the applied nanofibers, rather than penetrating into large pores or the depth of known filter paper or synthetic substrate. However, the fragility of such nanofiber filters has generally limited them to use with regenerable filter applications. Moreover, a drawback to the production of filtration media using nano-sized fiber and other nonwoven media has been the relatively low volume of fine fiber per unit time that can be produced using known processes.

### BRIEF DESCRIPTION OF THE INVENTION

In one aspect, a composite filter medium is provided that includes a corrugated substrate of nonwoven porous synthetic material, cellulose, or combinations thereof. The filter medium also includes a layer of bulk meltspun nanofibers anchored or bonded to the substrate. At least about 85% of the fine fibers have diameters less than 1000 nanometers in diameter.

In another aspect, a filter assembly including a filter housing having an input opening and an output opening is provided. The filter assembly also includes a pleated filter medium inside the filter cartridge and positioned between an inner screen and an outer screen. The filter medium has a substrate that includes nonwoven porous synthetic material, cellulose, or combinations thereof. The filter medium further includes a layer of meltspun fine fibers anchored or bonded to the substrate. At least about 85% of the fine fibers have diameters less than 1000 nanometers in diameter. The filter is configured such that gas entering the input opening has to pass through the pleated filter medium before exiting the output opening.

### BRIEF DESCRIPTION OF THE DRAWINGS

Embodiments of the present invention will now be described, by way of example only, with reference to the accompanying drawings, in which:
Figure 1 is a drawing showing a side cross-sectional view of an exemplary media configuration.
Figure 2 is a drawing illustrating an exemplary process for producing a configuration of filter media of the present invention.
Figure 3 is a photomicrograph illustrating exemplary sizes of nanofibers.
Figure 4 is a photomicrograph illustrating a side cross-sectional view of an exemplary nanofiber layer.
Figure 5 is a cut-away perspective drawing of an exemplary filter configuration.
Figure 6 is a photograph of an exemplary filter configuration in which the filter housings have been removed.
Figure 7 is a cross-sectional scanning electron microscope (SEM) micrograph showing a dust cake from prior art 80/20 paper media when dust is embedded in the pore structure of the paper.
Figure 8 is a cross-sectional scanning electron microscope (SEM) micrograph showing a configuration of the present invention in which a dust cake is retained on the surface of a nanofiber layer, and therefore is not becoming embedded in the substrate pore structure.

### DETAILED DESCRIPTION OF THE INVENTION

It will be appreciated that configurations of the present invention provide an economical filter medium and filters constructed therewith, as well as filters and filter media, that facilitate effective surface filtration and that can be cleaned effectively without premature failure or excessively high pressure drop in the application. Moreover, the meltspun process described herein does not require solvents that present environmental and safety issues, not the use of electr-statically charging of the media to attain filtration efficiency performance.

Some configurations of the present invention utilize a known process such as that described in any of U.S. Patent Nos. 4,536,361, 6,183,670, and/or 6,315,806 (the "Torobin process") to produce very fine fibers. These fibers are then applied to a fabric or paper substrate having specific selected properties, and the substrate and fibers are then calendared or thermo densified to produce a very cost-effective filter media that is competitive with electrospinning, but has the advantages of increased durability and airflow and at lower operating pressure drops. The Torobin process is modified by placing the fibers on fabric or paper (or other suitable filter medium) to facilitate enhancing the filter medium and to make the medium and fibers more durable by consolidating the fibers using a calendaring or thermo- densification process. Very fine fibers are thus produced in volume, at manufacturing speed, and applied to one surface of a filter support medium. The fibers facilitate enhancing the performance of the filter medium, and the process facilitates enhancing the durability of the fibers. The durability of filter configurations provided with the present invention makes them suitable for a wide range of regenerable filters that are subject to cleaning and continued use, whether such cleaning is continuous or accomplished by reverse pulsing applied to the filter when the pressure drop of the filter reaches a certain level.

The pressure drop is facilitated to be reduced as much as possible in some configurations, and the dust stuck to the surface of the filter can be cleaned off without nanofibers being released with the dust.

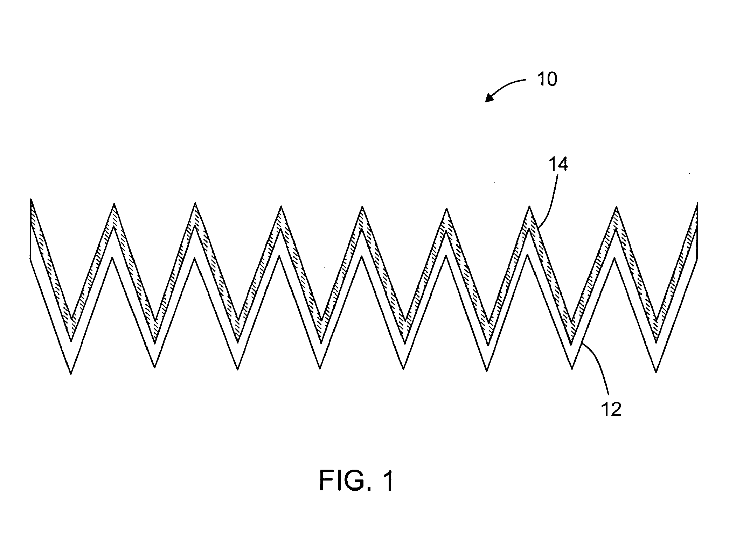

In some configurations, and more specifically, with reference to Figure 1, a composite two-layer filter medium 10 incorporates a cellulose-based filter paper substrate 12 and a very fine fiber layer 14 that utilizes nano-sized fibers produced by a bulk nanofiber melt spinning process. (As used herein, a nano-sized fiber is a fiber having a diameter of less than approximately 1.0 micron or 1000 nanometers.) Filter media 10 provides improved functional performance as well as commercial advantages over known comparable and existing products used in various industrial filtration applications. In some configurations, the media 10 are pleated and assembled into a filter cartridge for use in industrial applications such as gas turbine intake filtering, laser cutting, fine powder coating applications, etc.

More particularly, some embodiments of the present invention comprise a composite filter media 10 that includes a corrugated cellulose filtration paper substrate 12 having a known filtration efficiency, and a known air flow capacity having a very fine layer 14 of (primarily or exclusively) nano-sized fibers applied on a surface of the paper. Some configurations provide pleated composite filter media 10, and some configurations provide pleated composite filter media assembled into a filter cartridge. These filter cartridges are useful for gas turbines, for laser cutting apparatus, and various other industrial filtration applications. The filters are especially suitable in applications in which the filter is exposed to an in-process, reverse air pulsed cleaning cycle.

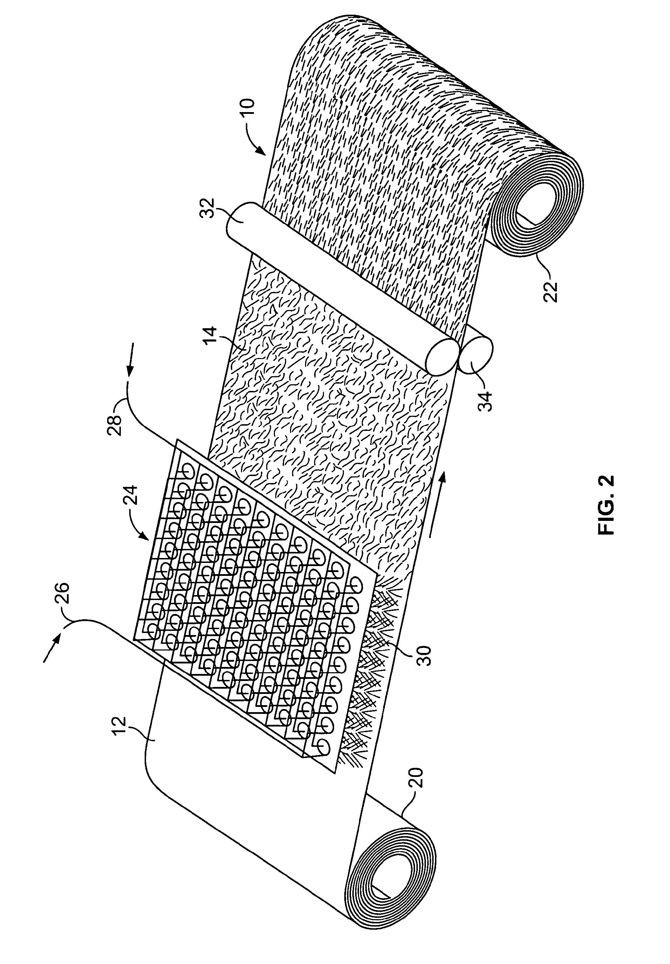

In some configurations of the present invention, and referring more specifically, to Figure 2, a fine nanofiber layer 14 is applied directly to a corrugated cellulose substrate 12 at a high speed production rate, for example, between a supply roll 20 of substrate 12 and a take-up roll 22 of filter medium 10. Substrate 12 is corrugated in some configurations, but need not be in all configurations. A meltspinning apparatus 24, similar to that described in U.S. Patent No. 6,315,806, issued Nov. 13, 2001 to Torobin et al., applies melt-blown fibers 30 to medium 10, using a molten polymer fluid supplied through conduit 28 and a fiberizing gas fluid supplied through conduit 26.

The applied nanofibers 30 in layer 14 are then densified using a thermal mechanical process, such as calendaring and/or thermal lamination, for example, via rollers 32 and 34. This densification anchors or bonds fine fibers 30 to supporting substrate 12 and enhances the durability and functional life of medium 10. In some configurations, losses in corrugation depth resulting from densification are controlled, reduced, and/or minimized by selecting a suitable type of calendar roll, selecting and/or controlling the applied pressure and temperature of the rolls, and the line speed.

In some configurations of the present invention, fiber layer 14 comprises about 85-90% nanosized fibers ranging from about 0.5 to 0.9 nanometers. Between about 10-15% of the nanosized fibers can be between approximately 1 micron and 5 microns in diameter. In some configurations, at least about 85% of applied fine fibers 30 in fine fiber layer 14 have diameters less than approximately 1000 nanometers. In some configurations, at least about 90% of applied fine fibers 30 in fine fiber layer 14 have diameters less than approximately 1000 nanometers. In some configurations, at least about 95% of applied fine fibers 30 in fine fiber layer 14 have diameters less than approximately 1000 nanometers. In some configurations, essentially 100% of applied fine fibers 30 in fine fiber layer 14 have diameters less than approximately 1000 nanometers.

Applied fine fibers 30 either comprise polypropylene or consist entirely of or essentially of polypropylene. Other polymers useful for the applied fine fibers include PET, PBT, other polyester type polymers, NYLON® and other related polymers, PPS, and other thermoplastic polymers, including other polymer fibers used in known industrial filter applications.

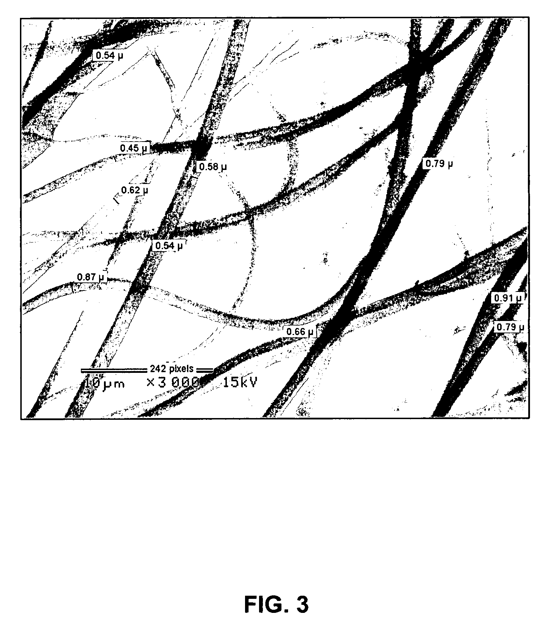

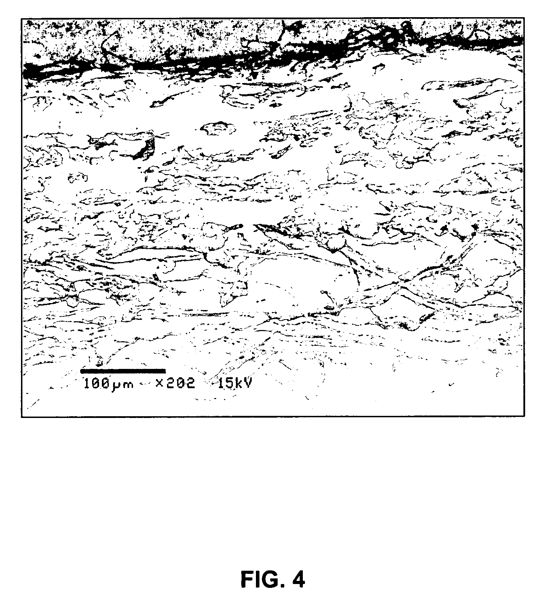

Figure 3 is a photomicrograph showing sizes of exemplary microfibers 30. Figure 4 is a photomicrograph showing a side cross-section view of an exemplary microfiber layer 14.

Some configurations of the present invention provide filtration efficiencies comparable to those of known filter media while providing improved air flow (i.e., lower pressure drop). Substrate papers 12 used in some configurations of the present invention are selected or manufactured to have a nominal air permeability of about 45 to 55 cfm at 0.5" DP (1.274 to 1.557 m³/min at 1.27 cm DP). Cellulose papers known to be used as filter papers in filtering applications have an air permeability between 20 to 30 cfm at 0.5" DP (0.5663 to 0.8495 m³/min at 1.27 cm DP).

Filtration efficiency can be facilitated to be increased without significantly reducing air flow in some configurations of the present invention by controlling the applied weight of nanofiber layer 14. Target weights between about 2 and 5 g/m² have been found to be especially effective. When fine fiber layer 14 is applied and calendared or densified, these weights allow a reduction of about 12 to 18 cfm at 0.5" DP (0.3398 m³/min at 1.27 cm DP) in final air permeability. The resulting final air permeability of composite media 10 is thus approximately 30 cfm (0.8495 m³/min) and/or approximately 50% higher than known, comparable products.

By having a lower DP, filters provided by configurations of the present invention allow increased air flow or throughput rates in many applications. Also, cost savings can be achieved because less filter media is needed for substantially the same effective filtering capability, and/or because less energy is needed to clean the filter.

The following table presents an exemplary comparison of the efficiency and pressure drops resulting from tests on flat sheet media 10, including a configuration of the present invention and representative prior art filter media.

| Property | Std Paper A | Std Paper B | Prior Art C | Prior Art D | Invention Config. A |
|---|---|---|---|---|---|
| Fiber Blend | 100% cellulose | 82/20 cell/PET | 80/20 w/ MB cap | 80/20 + ES nanofiber | 85/20 + MS nanofiber |
| Basis Weight(oz/sq.yd) | 3.80 | 3.90 | 5.25 | 3.45 | 3.60 |
| Paper Weight(lbs/3000sq.ft) | 79 | 81 | n/a | 72 | 75 |
| Air Perm. (cfm) | 17 | 15 | 20 | 15-20 | 25-30 |
| Thickness (inches) | 0.030 | 0.029 | 0.033 | 0.030 | 0.025 |
| Pore Size (microns) | 30-50 | 30-50 | n/a | 4-8 | 10-20 |
| Efficiency 100% 0.3mic DOP @ @ 10.5ft/min flow rate | -30% | 33.7% | 90% | 46% | 46% |
| DP in inches @ 10.5ft/min flow rate | n/a | 0.235 | 0.230 | 0.230 | 0.200 |

Additional configurations of the present invention apply a fine fiber layer 14 to another cellulose based and/or synthetic based (for example, 100% synthetic based) nonwoven substrate 12. In some configurations, substrate 12 is smooth and/or flat in appearance with no corrugations, and substrate 12 is either corrugated or dimpled during densification or during a pre-pleating step. Some of these configurations allow increased densification that can further improve product and/or process quality, and/or the control of the manufacturing process.

Thus, some configurations of the present invention provide a filter medium 10 comprising a substrate 12 and a layer 14 of bulk meltspun nanofibers 30 anchored or bonded to the substrate. Substrate 12 comprises nonwoven synthetic material or cellulose, or a combination thereof. In some configurations, cellulose is combined with an additional stiffening fiber, which can be, for example, glass fiber. Also, at least about 85%, 90%, or 95% of the fine fibers have diameters less than 1000 nanometers in diameter, depending upon the configuration. Fine fibers 30 comprise a thermoplastic, for example, polypropylene, PET, PBT, polyester polymers, Nylon®, PPS, or another thermoplastic polymer, or a combination thereof.

To achieve a suitable air permeability of filter medium 10 for some uses, substrate 12 is selected such that its fibers are produced to have a nominal air permeability (prior to the anchoring of bonding the meltspun nanofibers) between about 45 to 55 cfm at 0.5" DP (1.274 to 1.557 m³/min at 1.27 cm DP). Also, layer 14 of nanofibers 10 that is applied to substrate 12 has a basis weight of between about 2 to 5 g/m².

In some configurations of the present invention, substrate 12 comprises a corrogated cellulose filtration paper having a nominal air permeability between about 45 to 55 cfm at 0.5" DP (1.274 to 1.557 m³/min at 1.27 cm DP). In some of these configurations, nanofibers 30 is comprised of polypropylene and the layer of nanofibers fibers has a basis weight between about 2 to 5 g/m².

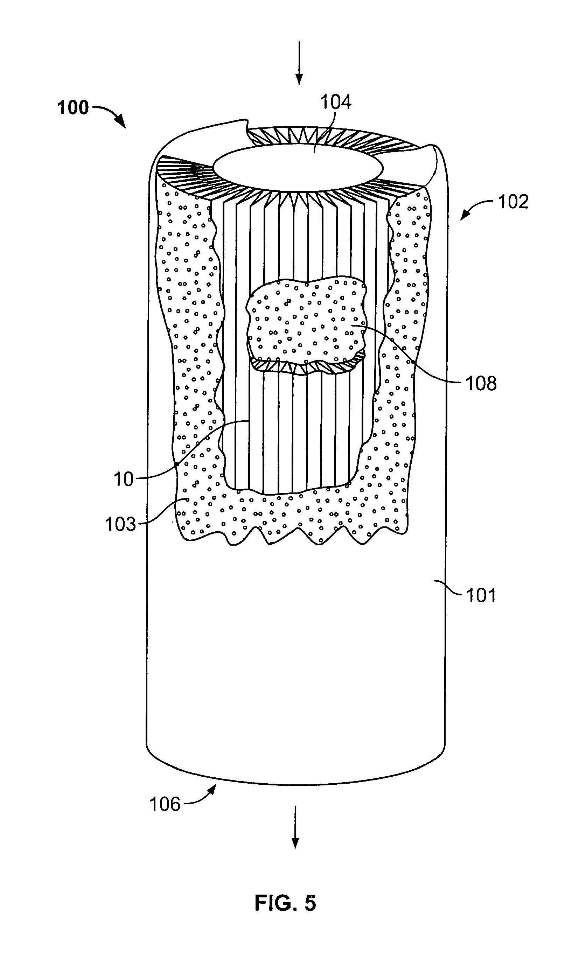

In some configurations of the present invention and referring to Figure 5, a filter assembly 100 is provided. Filter assembly 100 comprises a filter housing 101 that has an input opening 104 and an output opening 106 (indicated, but not visible in Figure 5). Inside filter cartridge 102, pleated filter medium 10 is provided that comprises a substrate 12 and a layer 14 of nanofibers 30 (as shown in Figures 1 and 2) anchored or bonded onto substrate 12. Pleated filter medium 10 occupies space between an inner screen 104 (shown in Figure 5 in a cut-away portion of pleated filter medium 10) such as a cylindrical screen, and an outer screen 103. Screen 104 has a closed bottom, and filter assembly 100 is configured so that gas entering opening 104 has to pass through screen 104, pleated filter medium 10 and outer screen 103 before exiting opening 106. For example, annular seals can be provided over the pleats around openings 104 and 106.

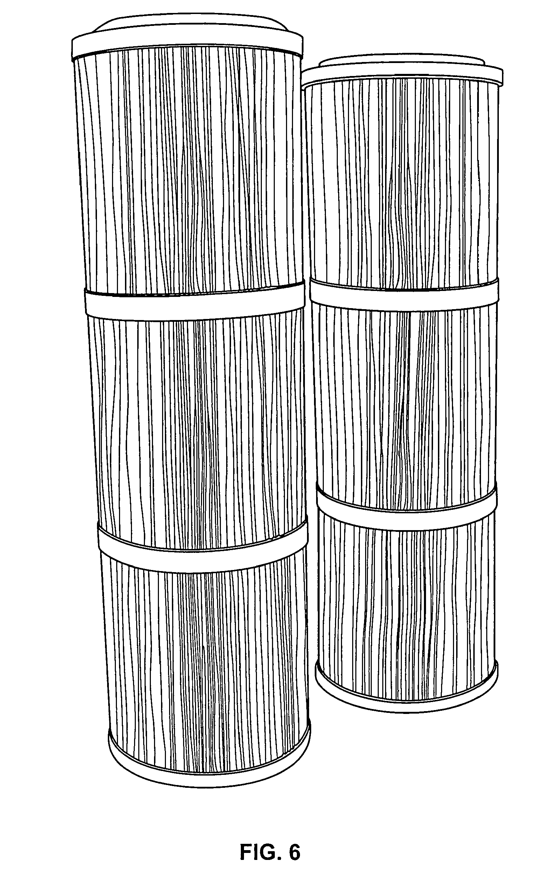

Figure 6 is a photograph of a filter assembly configuration of the present invention in which the filter housings have been removed. Dust on the floor is the results of tests having been performed on the filter assemblies.

Substrate 12 comprises a nonwoven porous synthetic material, or cellulose, or a combination of these materials. At least about 85%, or 90%, or 95% of nanofibers 30 have diameters less than 1000 nanometers in diameter, depending upon the configuration. In some configurations, filter medium 10 is calendered. Also, in some configurations, substrate 12 comprises a cellulose filtration paper and the nanofibers comprise polypropylene, PET, PBT, polyester polymers, NYLON®, PPS, or other thermoplastic polymers, or combinations of these materials. Substrate 12 in some configurations has a nominal air permeability between about 45 to 55 cfm at 0.5" DP (1.274 to 1.557 m3/min at 1.27 cm DP) and nanofibers 30 comprise polypropylene and nanofiber layer 14 has a basis weight between about 2 to 5 g/m². Because of the use of filter medium 10 configurations of the present invention, filters 100 are regenerable by reversing pulsing gas therethrough, are highly durable, and also provide low pressure drop across the filter when in use.

The following tables demonstrate the functional effectiveness of the nanofiber layer in reducing pressure drop across a filter resulting from dust loading of the filter. These results pertain to actual filters tested under simulated baghouse facility conditions. The nanofiber filters are tested for comparison alongside standard 80/20 filters to evaluate the effect of a nanofiber layer in the management or control of dust cake and the effect in achieving surface filtration versus depth filtration. The filters were tested under conditions that would challenge the media and be representative of a difficult application. Further, the filters where cleaned in the tests by reverse air pulsing.

### Pressure Drop Results from Filter Testing

| | 80/20 Paper w/small pleat lock | Nanofiber media w/small pleat lock | 80/20 Paper w/large pleat lock | Nanofiber media w/large pleat lock |
|---|---|---|---|---|
| | | | | |
| Initial DP (inch H₂O) | 3.9 | 3.0 | 3.0 | 4.6 |
| Final DP (inch H₂O) | 4.6 | 3.3 | 4.5 | 5.1 |
| DP rise (inch H₂O) | 0.7 | 0.3 | 1.5 | 0.5 |

Throughout the duration of the 100 hour test, the filter was cleaned or pulsed approximately 350 to 400 times. The data shows configurations of the present invention with a nanofiber layer exhibited a lower DP (drop in pressure) rise than the standard 80/20 equivalent product.

### Media Air Permeability Results - After Filter Testing

| | 80/20 Paper w/small pleat lock | Nanofiber media w/small pleat lock | 80/20 Paper w/large pleat lock | Nanofiber media w/large pleat lock |
|---|---|---|---|---|
| | | | | |
| Initial Air Permeability (cfm) at 0.5 inch H₂O | 18-20 | 25.0 | 18-20 | 25.0 |
| Dirty Air Permeability (cfm) at 0.5 inch H₂O | 3.6-4.5 | 13.0-15.8 | 3.0-3.8 | 10.0-12.5 |
| Average change in Air Permeability (cfm) at 0.5 inch H₂O | 79% | 44% | 82% | 55% |

The above test results show that the nanofiber layer is capturing the dust on the surface of the fine fiber layer and thus providing more effective cleaning of the media which in turn shows the filter is operating with a lower differential pressure. Air permeability readings were taken on the standard media and the nanofiber media "as new" and after filter testing. The above air permeability test results show that approximately 80% of air permeability has been lost when the dust is present on the media. In contrast only and average of 50% loss is air permeability was found with the nanofiber media. This difference is significant and supports the lower differential pressure drop results found in the first chart.

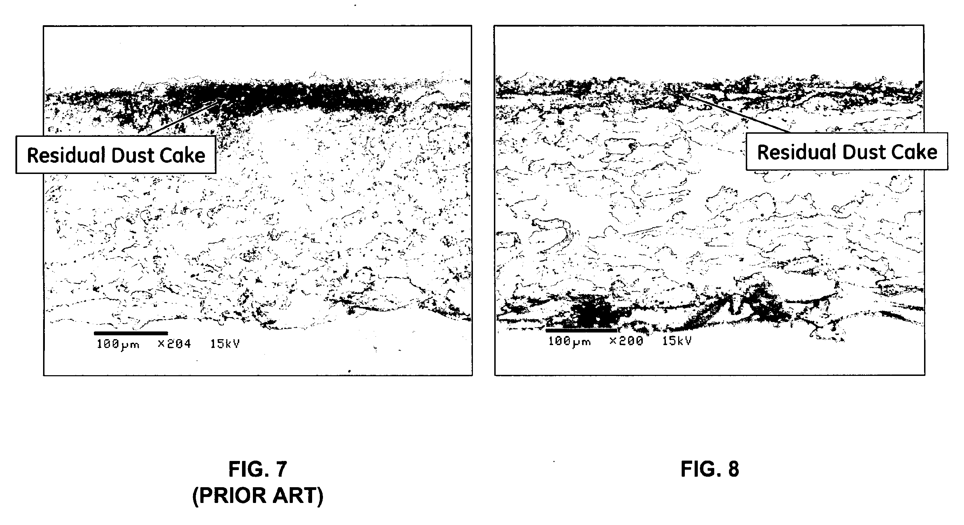

Figures 7 and 8 are cross-sectional SEM micrographs showing visual evidence of the charted data above. Figure 7 shows the dust cake from the tested, prior art, standard 80/20 paper media where the dust is embedded in the pore structure of the paper, whereas in Figure 8, the dust cake is retained on the surface of the nanofiber layer and is not becoming embedded in the substrate pore structure.

In some configurations of the present invention, filter medium 10 is calendared to bond nanofibers 30 in layer 14, and filter medium 10 is then pleated to form a pleated composite filter medium 10. The calendaring of substrate 12 with nanofiber layer 14 allows the bonded nanofibers to remain anchored to substrate 12 in the pleated medium even during and after pleating. More specifically in some configurations, a thermo-mechanical densification process is used to bond a fine nanofiber layer to the cellulose substrate to render the fine fiber layer fast to the paper and durable in the application.

The thermo-densification process used in some configurations renders the fine fiber layer both durable and functional when applied to a cellulose based substrate. In some configurations, the thermal densification process is done in-line, as a one step process with the application of the fine fibers.

The thermo densification process uses a combination of both heat and pressure to soften the fine polypropylene or polyester based fibers. Then, via a friction or thermoplastic bond, the fine fibers are adhered to the cellulose based fibers in the paper substrate. The temperature and pressure used to attain the bond is controlled within a range that can be empirically determined for each type of fiber and substrate. The relative smallness of the nanofibers, results in the fibers having very poor thermal insulation properties and hence, poor heat retention properties. Thus, if the process temperature is too hot or the exposure time to the heat is too long, the fine fibers can be thermally degraded and either melt and loose their fiber structure or a level of polymer cross-linking occurs and the fibers may not bond to the cellulose substrate.

On the other hand if the temperature is too low or exposure time too short, then poor adhesion may take place and the fine fiber layer may not be suitably durable.

Thermal densification is important for the formation of the fine fiber layer on the surface of the substrate to achieve optimum filtration properties, air permeability and pressure drop characteristics of the overall media. As the fine fiber layer is thermally bonded on to the substrate the fine fiber web is naturally densfied to attain a thinner layer, or more of a two dimensional layer of fine fibers, as well as a smaller, tighter pore structure and also a reduction in the air flow properties. The basis weight of the fine fiber layer applied can significantly affect the final air permeability properties.

The process temperature range to achieve durable bond of the fine fiber layer in some configurations is limited. Best bonding of the polypropylene has been observed between 190 - 200degF and around 225 - 240deg.F for the polyester fibers.

Two methods that can be used to attain a suitable thermal densification process include:
a) A calendaring process between two rolls such as a hot smooth steel roll and a cool synthetic based nip. In this process, both heat and pressure is applied at the same time, rendering the nanofiber layer very durable with a good bond, however, the pressure applied to impart the bond should be controlled to avoid a detrimental effect on the overall media thickness and ultimately, the air flow properties of the filter, in that a loss in corrugation depth of the base media can occur if too much pressure is applied. The heating of the fibers and the bonding occurs at the same point. Depending on temperatures, roll sizes and other process variables, these process configurations, process speeds up to about 20ft/min are possible.
b) In some configurations, a through-air oven is used, through which the fine fiber web is drawn through the oven via means of a guide belt. At several strategic positions either in or at the exit of the oven, a suitable nip point is located between two heated rolls. This process configuration is similar to the calendar but allows the web to be heated prior to bonding. Thus, higher speeds can be obtained. Further, the pressure used is less because the heat can be applied separately from the bonding points. With less pressure, less deformation of the base media or loss is corrugation is attained. Process speed of up to 200 ft/min. have been found to be possible with this process.

The above-described filter media provide a cost-effective and reliable means to facilitate effective surface filtration. The filter media can be effectively cleaned without increasing a likelihood of premature failure or excessive pressure drops. As a result, the improved filter media extend a useful life of the associated filters constructed therewith in a cost-effective and reliable manner.

Exemplary embodiments of filter media and filter assemblies are described above in detail. The media are not limited to the specific embodiments described herein, but rather, components of each filter media and of various filter assemblies may be utilized independently and separately from other filter media and filter components described herein.

While the invention has been described in terms of various specific embodiments, those skilled in the art will recognize that the invention can be practiced with modification within the spirit and scope of the claims.

### PARTS LIST

| | |
|---|---|
| 10 | filter media |
| 12 | substrate |
| 14 | layer |
| 30 | fine fibers |
| 32 | rollers |
| 34 | Rollers |
| 100 | filter assembly |
| 101 | filter housing |
| 102 | filter cartridge |
| 103 | outer screen |
| 104 | openings |
| 106 | output opening |

## Claims

1. A composite filter media (10) comprising:
a substrate (12) comprising a material selected from the group consisting of nonwoven porous synthetic material, cellulose, and combinations thereof; and
a layer of bulk meltspun nanofibers (30) engaged to said substrate, wherein at least about 85% of said nanofibers have diameters less than 1000 nanometers in diameter.

2. A media (10) in accordance with Claim 1 wherein said nanofibers (30) are compressed onto said substrate (12) via a thermomechanical process.

3. A media (10) in accordance with Claim 1 wherein said fine fibers (30) comprise at least one material selected from the group consisting of polypropylene, PET, PBT, polyester polymers, Nylon, PPS, and other thermoplastic polymers, and combinations thereof.

4. A media (10) in accordance with Claim 1 wherein said fine fibers comprise one of polypropylene and PBT.

5. A media (10) in accordance with Claim 1 wherein said layer of fine fibers (30) has a weight of between about 2 to 10 g/m².

6. A media (10) in accordance with Claim 1 wherein said substrate (12) has a base weight of between 60 to 340 g/m².

7. A media (10) in accordance with Claim 1 wherein said substrate (12) is pleated.

8. A filter assembly (100) comprising:
a filter housing (101) having an input opening and an output opening (106);
a pleated filter medium (10) inside said filter cartridge (102), said filter medium comprising a substrate comprising:
a material selected from the group consisting of nonwoven porous synthetic material, cellulose, and combinations thereof; and
a layer of bulk meltspun nanofibers (30) engaged to said substrate (12), wherein at least about 85% of said nanofibers have diameters less than 1000 nanometers in diameter.

9. A filter assembly (100) in accordance with Claim 8 further wherein said substrate (12) comprises cellulose and said fine fibers (30) comprise at least one material selected from the group consisting of polypropylene, PET, PBT, polyester polymers, Nylon, PPS, and other thermoplastic polymers, and combinations thereof.

10. A filter assembly (100) in accordance with Claim 8 wherein said fine fibers (30) comprise one of polypropylene and PBT.
